# EUROPÄISCHE PATENTANMELDUNG

(11) **EP 1 762 736 A1**
(43) Veröffentlichungstag der Anmeldung: **14.03.2007**
(21) Anmeldenummer: 05019528.8
(22) Anmeldetag: 08.09.2005
(51) Int. Cl.: F16D 3/84, F16D 3/227

(54) **Vorspannung durch Faltenbalg für ein XL-Verschiebegelenk**

(71) Anmelder: GKN Driveline Deutschland GmbH, 63073 Offenbach/Main 1 (DE)
(72) Erfinder: Braun, Frank, Dipl.-Ing, 56564 Neuwied (DE)
(74) Vertreter: Neumann, Ernst Dieter

(57) **Zusammenfassung**

Kugelgleichlaufdrehgelenk 11 mit einer Längsachse A und mit einem Gelenkaußenteil 19 mit einer ersten Gruppe von achsparallelen äußeren Kugelbahnen 12 und einer zweiten Gruppe von äußeren Kugelbahnen 13, die die Längsachse A unter ersten Winkeln α kreuzen, mit einem Gelenkinnenteil 20 mit einer ersten Gruppe von achsparallelen inneren Kugelbahnen 14 und einer zweiten Gruppe von inneren Kugelbahnen 15, die die Längsachse A unter zweiten, zu den ersten gleich großen und entgegengesetzten Winkeln β kreuzen, wobei äußere und innere Kugelbahnen 12, 14 der ersten Gruppen erste parallele Bahnpaare bilden, die erste Kugeln 16 aufnehmen, und wobei äußere und innere Kugelbahnen 13, 15 der zweiten Gruppen zweite sich kreuzende Bahnpaare bilden, die zweite Kugeln 17 aufnehmen, einem Kugelkäfig 22, der die ersten und zweiten Kugeln 16, 17 in umfangsverteilten Käfigfenstern 23 in einer gemeinsamen Ebene E hält, einer mit dem Gelenkinnenteil 20 fest verbundenen Welle 21, sowie einem Faltenbalg 24 zur Abdichtung des Gelenks, der an seinem einen Ende zumindest mittelbar mit dem Gelenkaußenteil 19 und an seinem anderen Ende mit der Welle 21 fest verbunden ist, wobei der Faltenbalg 24 so eingebaut ist, daß eine axiale Vorspannkraft F_{FB} im Faltenbalg 24 aufgebaut wird, die das Gelenkaußenteil 19 und die Welle 21 axial voneinander weg drückt.

## Beschreibung

Die Erfindung betrifft ein Kugelgleichlaufdrehgelenk der Bauart XL-Verschiebegelenk mit einer Längsachse A und mit einem Gelenkaußenteil mit einer ersten Gruppe von achsparallelen äußeren Kugelbahnen und einer zweiten Gruppe von äußeren Kugelbahnen, die die Längsachse A unter ersten Winkeln α kreuzen, mit einem Gelenkinnenteil mit einer ersten Gruppe von achsparallelen inneren Kugelbahnen und einer zweiten Gruppe von inneren Kugelbahnen, die die Längsachse A unter zweiten, zu den ersten gleich großen und jeweils entgegengesetzten Winkeln β kreuzen, wobei äußere und innere Kugelbahnen der ersten Gruppen erste parallele Bahnpaare bilden, die erste Kugeln aufnehmen, und wobei äußere und innere Kugelbahnen der zweiten Gruppen zweite sich kreuzende Bahnpaare bilden, die zweite Kugeln aufnehmen, einem Kugelkäfig, der die ersten und zweiten Kugeln in umfangsverteilten Käfigfenstern in einer gemeinsamen Ebene hält, einer mit dem Gelenkinnenteil fest verbundenen Welle, sowie einem Faltenbalg zur Abdichtung des Gelenks, der an seinem einen Ende zumindest mittelbar mit dem Gelenkaußenteil und an seinem anderen Ende mit der Welle fest verbunden ist.

XL-Verschiebegelenke gehören aufgrund ihrer Bahngestaltung zu den Gleichlaufverschiebegelenken, die eine wesentliche Axialverschiebung zwischen Gelenkaußenteil und Gelenkinnenteil zulassen. Sie dienen zur Drehmomentübertragung und zum gleichzeitigen Ausgleich von Längenänderungen in Gelenkwellen, insbesondere in den Seitenwellen von Fahrzeugantriebssträngen, die ein Differentialgetriebe mit einem Antriebsrad verbinden, oder in Längswellen von Fahrzeugantriebssträngen, die ein Wechselgetriebe mit einem Hinterachsdifferential verbinden. XL-Verschiebegelenke sind in Ausführungen mit jeweils drei ersten Bahnpaaren und drei zweiten Bahnpaaren, die sich über dem Umfang abwechseln, und damit insgesamt sechs Kugeln haben, ebenso bekannt wie in Ausführungen mit vier ersten Bahnpaaren und vier zweiten Bahnpaaren, die sich über dem Umfang abwechseln und somit acht Kugeln haben (DE 38 18 730 C1). Üblicherweise wird ein XL-Gleichlaufverschiebegelenk in Seitenwellen in Kombination mit einem Gleichlauffestgelenk verwendet, wobei ersteres differentialgetriebeseitig und letzteres radseitig angeordnet ist.

Der Gegenstand erstreckt sich sowohl auf Gelenke, bei denen die zweiten Bahnpaare über dem Umfang alle untereinander gleichartig geschrägt oder geschraubt ausgebildet sind, als auch auf solche Gelenke, bei denen die zweiten Bahnpaare über dem Umfang jeweils paarweise abwechselnd gegensinnig geschrägt oder geschraubt sind, d. h. daß die Kugelbahnen der zweiten Gruppe der äußeren Kugelbahnen ebenso wie die Kugelbahnen der zweiten Gruppe der inneren Kugelbahnen jeweils paarweise abwechselnde Steigung zur Längsrichtung über dem Umfang haben.

Bei den XL-Verschiebegelenken der eingangs genannten Art übertragen am gestreckten Gelenk nur die Kugeln in den ersten Bahnpaaren, d. h. in den zu der Längsachse A parallelen Bahnpaaren, ein Drehmoment, während es in den zweiten Bahnpaaren, die zur Längsachse schräg gestellt sind, an den Kugeln unter Drehmoment zu einer freien Axialkraft kommt, die eine axiale Ausgleichsbewegung zwischen Gelenkaußenteil und Gelenkinnenteil erzeugen, bis die Kugeln in den zweiten Bahnpaaren keinen kraftübertragenden Bahnkontakt mehr haben.

Wird nun in einem Antriebsstrang die Antriebsrichtung kurzfristig umgekehrt, z. B. beim Gaswegnehmen und/oder beim Motorbremsen, so muß zwangsläufig eine umgekehrt gerichtete Axialbewegung zwischen Gelenkaußenteil und Gelenkinnenteil auftreten, bis die Kugeln in den Bahnpaaren wieder aus einem kraftübertragenden Bahnkontakt heraus geraten- Hierdurch kann es zu einer instabilen Lage der Gelenkkomponenten zueinander kommen, die zu einer Schwingungsanregung und/oder zu Geräuschentwicklungen führen kann.

Der Erfindung liegt hiervon ausgehend die Aufgabe zugrunde, wechselnde Axialbewegungen der Gelenkkomponenten zueinander abzustellen. Die Lösung hierfür besteht in einem Kugelgleichlaufdrehgelenk mit einer Längsachse A und mit einem Gelenkaußenteil mit einer ersten Gruppe von achsparallelen äußeren Kugelbahnen und einer zweiten Gruppe von äußeren Kugelbahnen, die die Längsachse A unter ersten Winkeln α kreuzen, mit einem Gelenkinnenteil mit einer ersten Gruppe von achsparallelen inneren Kugelbahnen und einer zweiten Gruppe von inneren Kugelbahnen, die die Längsachse A unter zweiten, zu den ersten gleich großen und entgegengesetzten Winkeln β kreuzen, wobei äußere und innere Kugelbahnen der ersten Gruppen erste parallele Bahnpaare bilden, die erste Kugeln aufnehmen, und wobei äußere und innere Kugelbahnen der zweiten Gruppen zweite sich kreuzende Bahnpaare bilden, die zweite Kugeln aufnehmen, einem Kugelkäfig, der die ersten und zweiten Kugeln in umfangsverteilten Käfigfenstern in einer gemeinsamen Ebene hält, einer mit dem Gelenkinnenteil fest verbundenen Welle, sowie einem Faltenbalg zur Abdichtung des Gelenks, der an seinem einen Ende zumindest mittelbar mit dem Gelenkaußenteil und an seinem anderen Ende mit der Welle fest verbunden ist, wobei der Faltenbalg so eingebaut ist, daß eine axiale Vorspannkraft F_{FB} im Faltenbalg aufgebaut wird, die das Gelenkaußenteil und die Welle axial voneinander weg drückt.

Durch den durch axiale Druckkräfte vorgespannten Faltenbalg wird das Gelenkinnenteil von der Welle über die Kräfte des Faltenbalges aus dem Gelenkaußenteil in Richtung zum entgegengesetzten Ende der Welle gezogen. Damit wird im Falle des Lastwechsels das Gelenkinnenteil gegenüber dem Gelenkaußenteil erst dann eine axiale Ausgleichsbewegung durchführen, wenn die durch die Kräfte in den Bahnpaaren der zweiten Gruppe erzeugte Axialkraft den Betrag der durch den Faltenbalg eingebrachten axialen Vorspannkraft übersteigt Lastwechselreaktionen innerhalb des Gelenks z. B. werden durch diese Vorspannkraft abgestellt und durch den Faltenbalg gedämpft. Solche Lastwechselreaktionen können beispielsweise in Automatikfahrzeugen beim Einlegen einer Fahrstufe angeregt werden.

Mit der auf der Vorspannkraft des Faltenbalgs beruhenden axialen Vorspannung zwischen dem Gelenkaußenteil und der Welle besteht eine gleich große axiale Vorspannung zwischen dem Gelenkaußenteil und dem mit der Welle drehfest und axialfest verbundenen Gelenkinnenteil. Das Gelenkinnenteil stützt sich somit dauernd über die Gelenkkugeln und/oder den Kugelkäfig am Gelenkaußenteil ab, wobei die Abstützkraft, die drehmomentunabhängig ist, gering gehalten werden kann, so daß die Vorteile geringer Reibung im Gelenk weitgehend beibehalten werden. Andererseits hat jedoch in vorteilhafter Weise das Gelenkinnenteil eine definierte Position im Gelenkaußenteil, so daß die genannten Nachteile hinsichtlich Schwingungen und Geräuschentwicklung unterdrückt werden.

Die innere Vorspannkraft im Faltenbalg wird sinnvollerweise dadurch erzeugt, daß der Faltenbalg gegenüber seiner spannungsfreien Herstellänge L_{O} mit verkürzter Einbaulänge L_{X} verbaut ist, wobei diese Verkürzung auch noch Bestand hat, wenn sich das Gelenkinnenteil unter Überbrückung der Axialspiele über die Kugeln und/oder den Käfig an das Gelenkaußenteil angelegt hat. Bevorzugt ist der Faltenbalg so verbaut, daß auch seine größte Betriebslänge noch kürzer ist, als die spannungsfreie Herstellänge L_{O}.

Der Faltenbalg besteht hierbei in bevorzugter Ausgestaltung aus thermoplastischem Elastomer (TPE), welches eine relativ hohe Formsteifigkeit hat.

Das Gelenkaußenteil kann in vorteilhafter Weise einen axial entgegengesetzt zum Eintritt der Welle in das Gelenkaußenteil angeformten Boden haben.

Ein bevorzugtes Ausführungsbeispiel der Erfindung ist in den Zeichnungen dargestellt und wird nachstehend beschrieben.
- Figur 1: zeigt ein erfindungsgemäßes XL-Verschiebegelenk in einer ersten Ausführungsform im Längsschnitt;
- Figur 2: zeigt ein erfindungsgemäßes XL-Verschiebegelenk nach Figur 1 in Axialansicht;

- Figur 3: zeigt eine Abwicklung der Kugelbahnen eines Gelenks nach den Figuren 1 und 2;
- Figur 4: zeigt ein erfindungsgemäßes Verschiebegelenk in einer zweiten Ausführungsform im Längsschnitt;
- Figur 5: zeigt ein erfindungsgemäßes Verschiebegelenk nach Figur 3 in Axialansicht;
- Figur 6: zeigt eine Abwicklung der Kugelbahnen eines Gelenks nach den Figuren 4 und 5;
- Figur 7: zeigt den Faltenbalg für Gelenke nach den Figuren 1 bis 6 im Zustand der Herstellung;
- Figur 8: zeigt den Faltenbalg nach Figur 7 im Zustand der Verbauung.

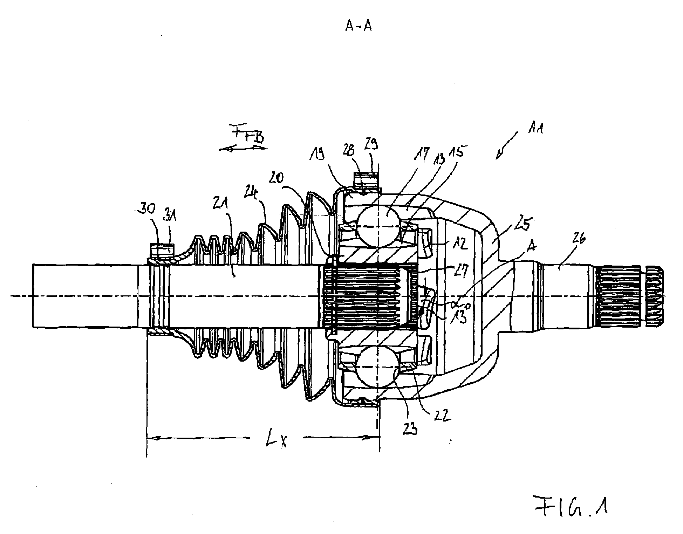

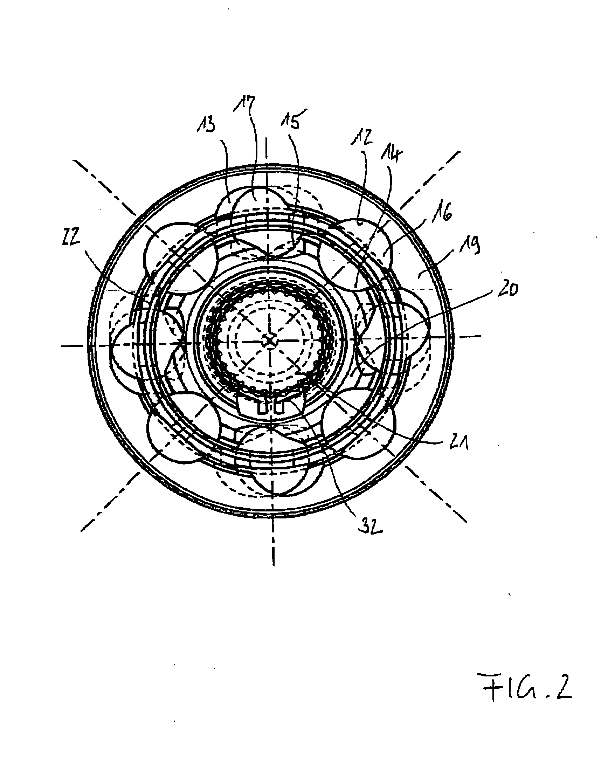

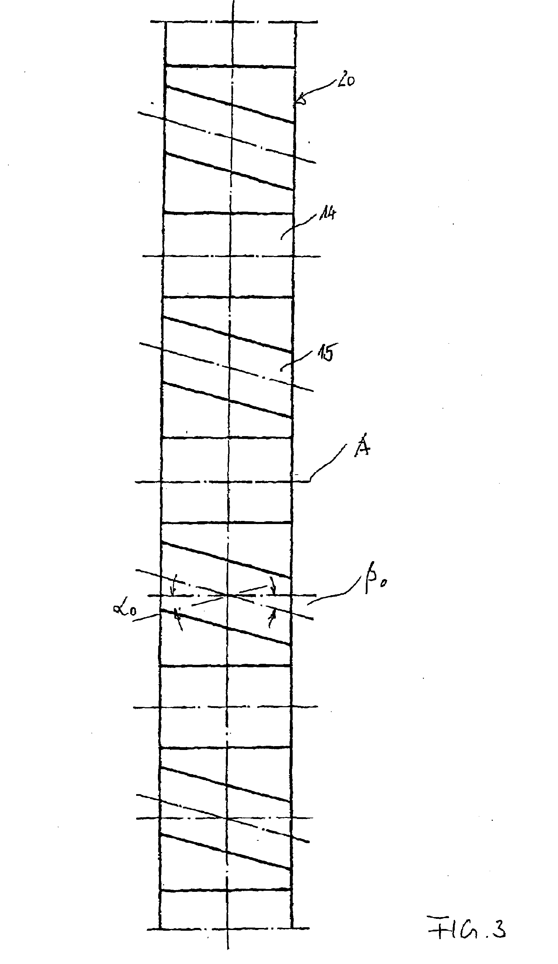

In Figur 1 ist ein erfindungsgemäßes Verschiebgelenk mit acht Kugeln in einer ersten Ausführung gezeigt, die in den Figuren 2 und 3 zusätzlich dargestellt wird. Ein Gelenkaußenteil 19 mit einem angeformten Boden 25 und einem an diesen angesetzten Wellenzapfen 26 nimmt ein Gelenkinnenteil 20 auf, in dessen Innenöffnung 27 eine Welle 21 eingesteckt ist. Das Gelenk wird von einem Faltenbalg 24 abgedichtet, dessen größerer Bund 28 mittels eines Spannbandes 29 auf dem Gelenkaußenteil 19 festgelegt ist und dessen kleinerer Bund 30 mittels eines Spannbandes 31 auf der Welle 21 festgelegt ist. Das Gelenk ist in einer mittleren Verschiebeposition gezeigt, von der aus es verkürzt oder verlängert werden kann. Die Einbaulänge des Faltenbalgs ist mit L_{X} bezeichnet. Hierbei steht der Faltenbalg unter einer Druckvorspannung F_{FB}.

Im Gelenkaußenteil 19 sind erste äußere Kugelbahnen 12 zu erkennen, die parallel zur Längsachse A des Gelenkes verlaufen, sowie zweite äußere Kugelbahnen 13, die unter einem Kreuzungswinkel α₀ zur Längsachse A des Gelenks verlaufen. Den Kugelbahnen 12 liegen jeweils ebenfalls achsparallele Kugelbahnen (14) im Gelenkinnenteil 20 gegenüber, von denen hier keine erkennbar ist; den Kugelbahnen 13 liegen jeweils zweite innere Kugelbahnen 15 im Gelenkinnenteil 20 gegenüber, die mit der Längsachse A einen entgegengesetzten Kreuzungswinkel wie die Bahnen 13 bilden. In den Bahnpaaren aus zueinander parallelen Kugelbahnen sind erste Kugeln (16) aufgenommen, in den zweiten Bahnpaaren 13, 15 sind zweite Kugeln 17 aufgenommen- Die Kugeln 16, 17 werden von einem Kugelkäfig 22, der die Kugeln in Käfigfenstern 23 aufnimmt, in einer gemeinsamen Ebene gehalten.

In Figur 2 sind in einer Ansicht auf das Gelenk bei demontiertem Faltenbalg das Gelenkaußenteil 19 und das Gelenkinnenteil 20 erkennbar sowie die mittels eines Sicherungsringes 32 im Gelenkinnenteil festgelegte Welle 21. Der Kugelkäfig 22 ist ebenfalls sichtbar. Im Gelenkaußenteil 19 sind umfangsverteilt vier achsparallele erste äußere Kugelbahnen 12 gezeigt. Im Gelenkinnenteil 20 sind diesen zugeordnete achsparallele erste innere Kugelbahnen 14 vorgesehen. Jeweils erste Paare von Kugelbahnen 12, 14 nehmen drehmomentübertragende Kugeln 16 auf. Jeweils zwischen zwei ersten äußeren Kugelbahnen liegen zweite äußere Kugelbahnen 13, die mit der Längsachse A einen Kreuzungswinkel (α₀) bilden. Jeweils den zweiten äußeren Kugelbahnen 13 zugeordnet sind zweite innere Kugelbahnen 15 im Gelenkinnenteil 20, die einen zu den Bahnen 13 entgegengesetzten Kreuzungswinkel (β₀) aufweisen. Die sich kreuzenden Bahnpaare 13, 15 nehmen zweite Kugeln 17 auf. Die Kreuzungswinkel aller vier zweiten äußeren Kugelbahnen 13 (α₀) und die Kreuzungswinkel aller zweiten inneren Kugelbahnen 15 (β₀) sind jeweils untereinander gleich.

In Figur 3 ist dies näher dargestellt, wobei eine Abwicklung des Gelenkinnenteils 20 darstellt, daß die vier ersten inneren Kugelbahnen 14 parallel zur Längsachse A sind, während die zweiten inneren Kugelbahnen 15 gegenüber der Längsachse einen Kreuzungswinkel β₀ bilden. Der Kreuzungswinkel β₀ ist für alle zweiten inneren Kugelbahnen gleich groß und im gleichen Sinn angetragen. Die den zweiten inneren Kugelbahnen 15 zugeordneten zweiten äußeren Kugelbahnen 13 im Gelenkaußenteil haben jeweils einen entgegengesetzt angetragenen dem Betrag nach gleich großen Kreuzungswinkel α₀, wie in Figur 1 bereits angedeutet.

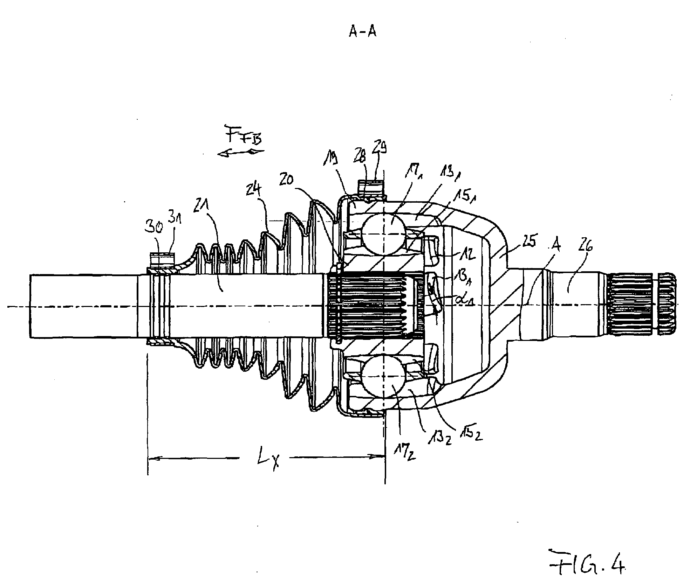

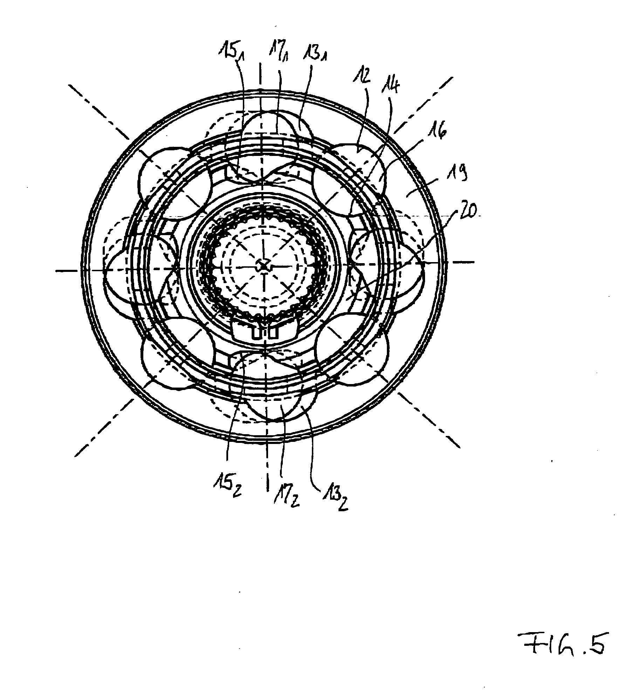

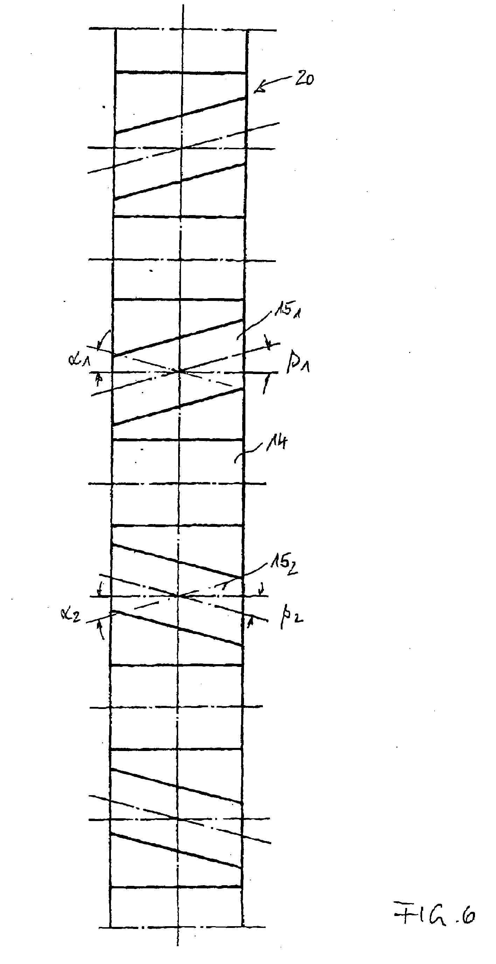

In Figur 4 ist ein erfindungsgemäßes Verschiebegelenk mit acht Kugeln in einer zweiten Ausführung gezeigt, die in den Figuren 5 und 6 zusätzlich dargestellt wird. Ein Gelenkaußenteil 19 mit einem angeformten Boden 25 und einem an diesen angesetzten Wellenzapfen 26 nimmt ein Gelenkinnenteil 20 auf, in dessen Innenöffnung 27 eine Welle 21 eingesteckt ist. Das Gelenk wird von einem Faltenbalg 24 abgedichtet, dessen größerer Bund 28 mittels eines Spannbandes 29 auf dem Gelenkaußenteil 19 festgelegt ist und dessen kleinerer Bund 30 mittels eines Spannbandes 31 auf der Welle 21 festgelegt ist. Das Gelenk ist in einer mittleren Verschiebeposition gezeigt, von der aus es verkürzt oder verlängert werden kann. Die Einbaulänge des Faltenbalgs ist mit L_{X} bezeichnet. Hierbei steht der Faltenbalg unter einer Druckvorspannung F_{FB}.

Im Gelenkaußenteil sind erste äußere Kugelbahnen 12 zu erkennen, die parallel zur Längsachse A des Gelenkes verlaufen, sowie zwei Gruppen von zweiten äußeren Kugelbahnen 13₁, 13₂, die unter einem Kreuzungswinkel α₁, α₂ zur Längsachse A des Gelenks verlaufen. Den Kugelbahnen 12 liegen jeweils ebenfalls achsparallele Kugelbahnen (14) im Gelenkinnenteil 20 gegenüber, von denen hier keine erkennbar ist; den Kugelbahnen 13₁, 13₂ liegen jeweils zwei Gruppen von zweiten inneren Kugelbahnen 15₁, 15₂ im Gelenkinnenteil 20 gegenüber, die jeweils mit der Längsachse einen entgegengesetzten Kreuzungswinkel (β₁, β₂) wie die Kugelbahnen 13₁, 13₂ bilden. In den Bahnpaaren aus zueinander parallelen Kugelbahnen sind erste Kugeln (16) aufgenommen, in den zwei Gruppen von zweiten Bahnpaaren 13₁, 15₁, 13₂, 15₂ sind zwei Gruppen von zweiten Kugeln 17₁, 17₂ aufgenommen. Die Kugeln 16, 17₁, 17₂ werden von einem Kugelkäfig 22, der die Kugeln in Käfigfenstern 23 aufnimmt, in einer gemeinsamen Ebene gehalten.

In Figur 5 sind in einer Ansicht auf das Gelenk bei demontiertem Faltenbalg das Gelenkaußenteil 19 und das Gelenkinnenteil 20 erkennbar sowie die mittels eines Sicherungsringes 32 im Gelenkinnenteil festgelegte Welle 21. Der Kugelkäfig 22 ist ebenfalls sichtbar. Im Gelenkaußenteil 19 sind umfangsverteilt vier achsparallele er ste äußere Kugelbahnen 12 gezeigt, Im Gelenkinnenteil 20 sind diesem zugeordnete achsparallele erste innere Kugelbahnen 14 vorgesehen. Jeweils erste Paare von Kugelbahnen 12, 14 nehmen drehmomentübertragende Kugeln 16 auf. Jeweils zwischen zwei ersten äußeren Kugelbahnen 12 liegen zweite äußere Kugelbahnen 13₁ einer ersten Gruppe, die mit der Längsachse A einen Kreuzungswinkel (α₁) bilden, sowie zweite äußere Kugelbahnen 13₂ einer zweiten Gruppe, die mit der Längsachse einen entgegengesetzt angetragenen Kreuzungswinkel (α₂) bilden. Jeweils den zweiten äußeren Kugelbahnen 13₁, 13₂ zugeordnet sind zweite innere Kugelbahnen 15₁, 15₂ im Gelenkinnenteil 20, die jeweils einen zu den Kugelbahnen 13₁ entgegengesetzten Kreuzungswinkel (β₁, β₂) aufweisen. Die sich kreuzenden Bahnpaare 13₁, 15₁, 13₂, 15₂ nehmen zwei Gruppen von Kugeln 17₁, 17₂ auf. Die Kreuzungswinkel aller vier zweiten äußeren Kugelbahnen 13₁, 13₂ beider Gruppen und die Kreuzungswinkel aller zweiten inneren Kugelbahnen 15₁, 15₂ beider Gruppen sind dem Betrage nach untereinander gleich.

In Figur 6 ist dies näher dargestellt, wobei eine Abwicklung des Gelenkinnenteils 20 darstellt, daß die vier ersten inneren Kugelbahnen 14 parallel zur Längsachse A sind, während die zweiten inneren Kugelbahnen 15₁ der ersten Gruppe gegenüber der Längsachse einen Kreuzungswinkel β₁ bilden und die zweiten inneren Kugelbahnen 15₂ der zweiten Gruppe einen dazu entgegengesetzt angetragenen Kreuzungswinkel β₂ bilden. Die den zweiten inneren Kugelbahnen 15₁, 15₂ zugeordneten zweiten äußeren Kugelbahnen 13₁, 13₂ im Gelenkaußenteil haben jeweils einen entgegengesetzt angetragenen dem Betrag nach gleich großen Kreuzungswinkel α₁,α₂ wie in Figur 4 bereits angedeutet.

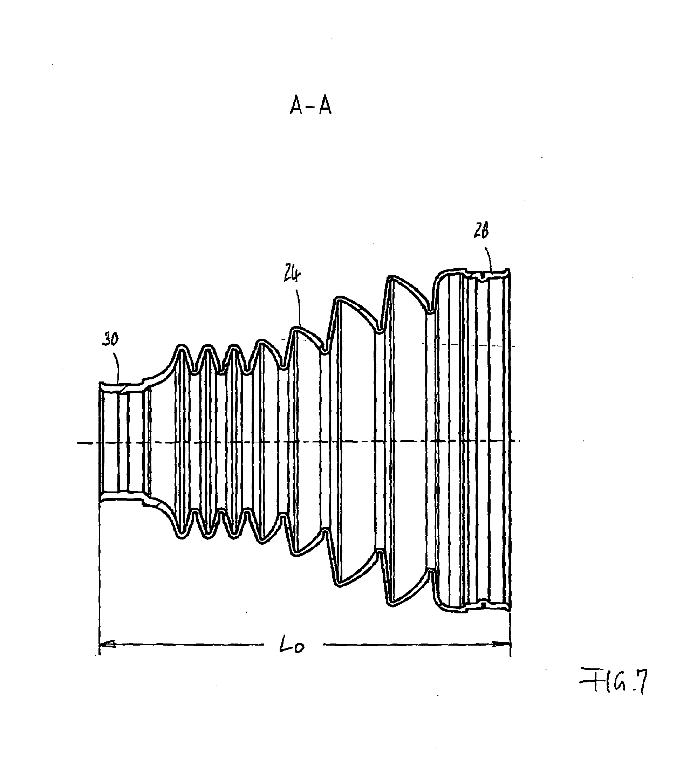

In Figur 7 ist der Faltenbalg 24 mit seiner fertigungsbedingten Herstellungslänge L_{O} über die Bundbereiche 28, 30 gemessen in entspanntem Zustand gezeigt, in dem der Faltenbalg kraftfrei seine Länge beibehält.

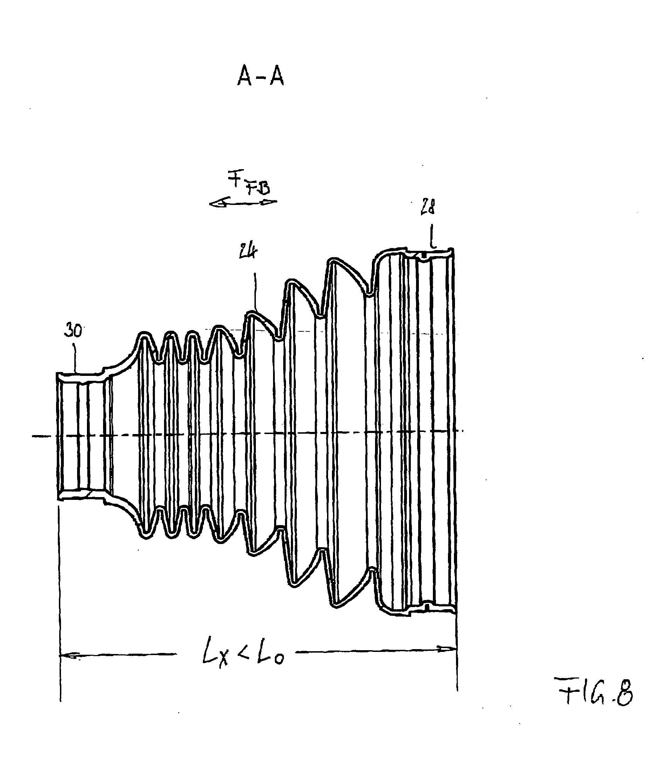

In Figur 8 ist der Faltenbalg 24 über die Bundbereiche 28, 30 gemessen in der verkürzten Einbaulänge L_{X} gezeigt, die kleiner ist als L_{O}, wobei der Faltenbalg eine axiale Druckvorspannkraft F_{FB} erzeugt. Diese bewirkt, daß in den Gelenken nach den Figuren 1 und 4 jeweils das Gelenkinnenteil von der Welle 21 aus dem Gelenkaußenteil 19 herausgezogen wird, in Richtung auf das andere bzw. freie Ende der Welle 21. Eine indifferente Position des Gelenks wird hiermit zumindest über einen weiten Bereich des Verschiebeweges des Gelenkes vermieden. Idealerweise bleibt diese axiale Vorspannkraft F_{FB} über dem gesamten axialen Verschiebebereich des XL-Verschiebegelenkes positiv aufrechterhalten. Das bedeutet, daß auch bei maximal verlängertem Gelenk die größte Betriebslänge des Faltenbalgs noch kleiner ist, als die spannungsfreie Herstellänge L_{O}.

### Bezugszeichenliste

- 11: Gelenk
- 12: erste äußere Kugelbahn
- 13: zweite äußere Kugelbahn
- 14: erste innere Kugelbahn
- 15: zweite innere Kugelbahn
- 16: erste Kugeln
- 17: zweite Kugeln
- 18:
- 19: Gelenkaußenteil
- 20: Gelenkinnenteil
- 21: Welle
- 22: Kugelkäfig
- 23: Käfigfenster
- 24: Faltenbalg
- 25: Gelenkboden
- 26: Wellenzapfen
- 27: Innenöffnung
- 28: Bund
- 29: Spannband
- 30: Bund
- 31: Spannband

## Patentansprüche

1. Kugelgleichlaufdrehgelenk (11) mit einer Längsachse A und mit einem Gelenkaußenteil (19) mit einer ersten Gruppe von achsparallelen äußeren Kugelbahnen (12) und einer zweiten Gruppe von äußeren Kugelbahnen (13), die die Längsachse A unter ersten Winkeln α kreuzen, mit einem Gelenkinnenteil (20) mit einer ersten Gruppe von achsparallelen inneren Kugelbahnen (14) und einer zweiten Gruppe von inneren Kugelbahnen (1 5), die die Längsachse A unter zweiten, zu den ersten gleich großen und entgegengesetzten Winkeln β kreuzen, wobei äußere und innere Kugelbahnen (12, 14) der ersten Gruppen erste parallele Bahnpaare bilden, die erste Kugeln (16) aufnehmen, und wobei äußere und innere Kugelbahnen (13, 15) der zweiten Gruppen zweite sich kreuzende Bahnpaare bilden, die zweite Kugeln (17) aufnehmen, einem Kugelkäfig (22), der die ersten und zweiten Kugeln (16, 17) in umfangsverteilten Käfigfenstern (23) in einer gemeinsamen Ebene E hält, einer mit dem Gelenkinnenteil (20) fest verbundenen Welle (21), sowie einem Faltenbalg (24) zur Abdichtung des Gelenks, der an seinem einen Ende zumindest mittelbar mit dem Gelenkaußenteil (19) und an-seinem anderen Ende mit der Welle (21) fest verbunden ist,
**dadurch gekennzeichnet,**
**daß** der Faltenbalg (24) so eingebaut ist, daß eine axiale Vorspannkraft F_{FB} im Faltenbalg (24) aufgebaut wird, die das Gelenkaußenteil (19) und die Welle (21) axial voneinander weg drückt.

2. Gelenk nach Anspruch 1,
**dadurch gekennzeichnet,**
**daß** der Faltenbalg (24) gegenüber seiner spannungsfreien Herstellänge (L_{O}) mit verkürzter Einbaulänge (L_{X}) verbaut ist.

3. Gelenk nach einem der Ansprüche 1 oder 2,
**dadurch gekennzeichnet,**
**daß** der Faltenbalg aus thermoplastischem Elastomer (TPE) besteht.

4. Gelenk nach einem der Ansprüche 1 bis 3,
**dadurch gekennzeichnet,**
**daß** das Gelenkaußenteil (19) axial entgegengesetzt zum Eintritt der Welle (21) einen angeformten Boden (25) hat.

5. Gelenk nach einem der Ansprüche 1 bis 4,
**dadurch gekennzeichnet,**
**daß** es vier erste Bahnpaare (12, 14) und vier zweite Bahnpaare (13, 15) hat.

6. Gelenk nach einem der Ansprüche 1 bis 5,
**dadurch gekennzeichnet,**
**daß** die ersten Winkel α₀ untereinander gleichsinnig geschrägt sind ebenso wie die zweiten Winkel β₀ untereinander gleichsinnig geschrägt sind, so daß die zweiten Gruppen von äußeren Kugelbahnen (13) und die zweiten Gruppen von inneren Kugelbahnen (15) jeweils untereinander gleiche Steigungskonfiguration zur Längsachse A haben.

7. Gelenk nach einem der Ansprüche 1 bis 5,
**dadurch gekennzeichnet,**
**daß** die ersten Winkel α₁, α₂ jeweils paarweise gegensinnig geschrägt sind ebenso wie die zweiten Winkel β₁, β₂ jeweils paarweise gegensinnig geschrägt sind, so daß die zweiten Gruppen von äußeren Kugelbahnen (13) und die zweiten Gruppen von inneren Kugelbahnen (15) jeweils untereinander paarweise wechselnde Steigungskonfiguration zur Längsachse haben.
